# EUROPEAN PATENT APPLICATION

(11) **EP 4 765 466 A1**
(43) Date of publication of application: **24.06.2026**
(21) Application number: 23949542.7
(22) Date of filing: 25.10.2023
(51) Int. Cl.: H01M 50/627, H01M 50/244, H01M 50/249, H01M 50/24, H01M 50/271

(54) **ELECTROLYTE INJECTION NOZZLE, ELECTROLYTE INJECTION APPARATUS, BATTERY CELL, BATTERY, AND ELECTRIC DEVICE**

(30) Priority: 23.08.2023 CN 202322279976 U
(71) Applicant: Contemporary Amperex Technology Co., Limited, Ningde, Fujian 352100 (CN)
(72) Inventor: CHEN, Yan, Ningde, Fujian 352100 (CN); LUO, Weijie, Ningde, Fujian 352100 (CN)
(74) Representative: Ziebig Hengelhaupt Intellectual Property Attorneys Patentanwaltskanzlei PartGmbB
(86) International application number: PCT/CN2023/126559
(87) International publication number: WO 2025/039359

(57) **Abstract**

An electrolyte injection nozzle, an electrolyte injection apparatus, a battery cell, a battery, and an electric apparatus are provided. This application pertains to the field of battery technologies. The electrolyte injection nozzle includes an expansion segment, where a flow area of the electrolyte injection nozzle increases in the expansion segment along a direction from an inlet end of the electrolyte injection nozzle to an outlet end of the electrolyte injection nozzle.

## Description

### CROSS-REFERENCE TO RELATED APPLICATIONS

This application is based on Chinese Patent Application No. 202322279976.4, filed on August 23, 2023, and claims the priority of this Chinese patent application, which is incorporated herein by reference in its entirety.

### TECHNICAL FIELD

This application relates to the field of battery technologies, and particularly, to an electrolyte injection nozzle, an electrolyte injection apparatus, a battery cell, a battery, and an electric apparatus.

### BACKGROUND

In recent years, there has been a leap in the development of new energy vehicles. In the field of electric vehicles, traction batteries serve as an irreplaceable and crucial power source. The traction battery includes several battery cells. However, the manufacturing efficiency of the battery cells remains low and requires improvement.

### SUMMARY

Embodiments of this application provide an electrolyte injection nozzle, an electrolyte injection apparatus, a battery cell, a battery, and an electric apparatus, so as to improve the manufacturing efficiency of the battery cell.

According to a first aspect, an embodiment of this application provides an electrolyte injection nozzle, where the electrolyte injection nozzle includes an expansion segment, a flow area of the electrolyte injection nozzle increases in the expansion segment along a direction from an inlet end of the electrolyte injection nozzle to an outlet end of the electrolyte injection nozzle.

In the above technical solution, when an electrolyte flows through the electrolyte injection nozzle, the electrolyte passes through the expansion segment, which facilitates an increase in the electrolyte injection efficiency, reduces the electrolyte injection time, and improves the manufacturing efficiency of the battery cell, thereby improving the electrolyte injection efficiency, reducing the electrolyte injection time, and improving the manufacturing efficiency of the battery cell.

In some embodiments, a flow area of the inlet end of the electrolyte injection nozzle is smaller than a flow area of the outlet end of the electrolyte injection nozzle.

In the above technical solution, since the flow area of the outlet end of the electrolyte injection nozzle is larger than that of the inlet end, the electrolyte injection area can be effectively increased, the electrolyte injection efficiency can be improved, the electrolyte injection time is reduced, and the production efficiency of the battery cell is improved. Moreover, the electrolyte injection nozzle of these embodiments of this application has a relatively larger flow area at the outlet end compared with the inlet end, which is equivalent to the form of an expanded outlet. The resistance at the outlet is relatively low, and no positive pressure is required during electrolyte injection, which facilitates a reduction in the risk of electrolyte spraying.

In some embodiments, the expansion segment is formed in a gradually expanding shape in which the flow area gradually increases along the direction from the inlet end to the outlet end.

In the above technical solution, configuring the expansion segment as a gradually expanding form facilitates improving flow characteristics of the electrolyte passing through the expansion segment, reducing flow resistance losses.

In some embodiments, the electrolyte injection nozzle includes a contraction segment, where the contraction segment is disposed on a side of the expansion segment away from the inlet end, a flow area of the contraction segment gradually decreases along the direction from the inlet end to the outlet end, and a minimum cross-sectional end of the contraction segment constitutes the outlet end.

In the above technical solution, the outlet position of the electrolyte injection nozzle is configured as a slightly constricted form, which facilitates the fit between the electrolyte injection nozzle and an electrolyte injection port, mitigates the problem of conductive particles being formed due to friction and collision at the position between the electrolyte injection nozzle and the electrolyte injection port of the battery cell, reduces the risk of reliability problems for a cell assembly caused by the conductive particles entering a housing through the electrolyte injection port, thereby facilitating an improvement in the reliability of the battery cell.

In some embodiments, a flow area of the minimum cross-sectional end of the contraction segment is larger than a flow area of a minimum cross-sectional end of the expansion segment, and an axial length of the contraction segment is smaller than an axial length of the expansion segment.

In the above technical solution, a larger expansion range is obtained, which improves electrolyte injection efficiency, reduces electrolyte injection time, and improves the production efficiency of the battery cell. Moreover, it is also conducive for the fit between the outlet end of the electrolyte injection nozzle and the electrolyte injection port, mitigating the problem of conductive particles being formed due to frictional collision at the position between the electrolyte injection nozzle and the electrolyte injection port of the battery cell, and reducing the risk of reliability problems for the cell assembly caused by the conductive particles entering the housing through the electrolyte injection port, thereby facilitating an improvement in the reliability of the battery cell.

In some embodiments, the electrolyte injection nozzle includes a first constant cross-section segment, where the first constant cross-section segment is connected between the expansion segment and the contraction segment, a flow area of the first constant cross-section segment is equal to both a flow area of a maximum cross-sectional end of the contraction segment and a flow area of a maximum cross-sectional end of the expansion segment, respectively, and an axial length of the first constant cross-section segment is greater than an axial length of the contraction segment.

In the above technical solution, an axial length of a segment with a larger flow area of the electrolyte injection nozzle is relatively long, thereby more effectively improving the electrolyte injection efficiency, reducing the electrolyte injection time, and improving the production efficiency of the battery cell.

In some embodiments, an outer wall of the contraction segment is a smooth curved surface.

In the above technical solution, when the electrolyte injection nozzle fits with the electrolyte injection port, friction and collision at the position between the contraction segment and the electrolyte injection port of the battery cell can be further reduced, and the problem of conductive particles falling into the electrolyte injection port is further mitigated, thereby facilitating a further improvement in the reliability of the battery cell.

In some embodiments, the electrolyte injection nozzle includes a second constant cross-section segment, where the second constant cross-section segment is connected on a side of the expansion segment away from the outlet end, where a flow area of the second constant cross-section segment is equal to a flow area of a minimum cross-sectional end of the expansion segment, and an end of the second constant cross-section segment away from the expansion segment constitutes the inlet end.

In the above technical solution, a structure of the electrolyte injection nozzle is simple and facilitates connection of the electrolyte injection nozzle with an electrolyte supply channel of the electrolyte injection apparatus.

In some embodiments, the outlet end of the electrolyte injection nozzle is formed in an elongated shape.

In the above technical solution, an area of the outlet end is increased, and the size occupied by the outlet end of the electrolyte injection nozzle in a plurality of directions is reduced, which facilitates the fit of the electrolyte injection nozzle with a relatively thin battery cell, and improves adaptability of the electrolyte injection nozzle, so as to maximize utilization of space on the battery cell and increase the area of the outlet end of the electrolyte injection nozzle as much as possible.

In some embodiments, a cross-sectional shape of the expansion segment is consistent with a shape of the outlet end of the electrolyte injection nozzle.

In the above technical solution, a gradual shape transition of the electrolyte injection nozzle and a smooth transition are provided, which helps to improve flow performance of the electrolyte within the electrolyte injection nozzle.

According to a second aspect, an embodiment of this application further provides an electrolyte injection apparatus including the electrolyte injection nozzle according to any one of the above solutions.

In the above technical solution, the electrolyte injection efficiency can be improved, and the electrolyte injection time is reduced.

According to a third aspect, an embodiment of this application further provides a battery cell including a housing assembly, where the housing assembly has an accommodation cavity, the housing assembly has an electrolyte injection port communicating with the accommodation cavity, the battery cell is injected with an electrolyte using the electrolyte injection nozzle according to any one of the above solutions, and the electrolyte injection nozzle injects the electrolyte into the accommodation cavity through the electrolyte injection port.

In the above technical solution, since electrolyte injection is performed using the electrolyte injection nozzle according to this embodiment of this application, the electrolyte injection efficiency can be improved, thereby facilitating a reduction in the manufacturing process time of the battery cell.

In some embodiments, a shape of the electrolyte injection port matches a shape of an outlet end of the electrolyte injection nozzle.

In the above technical solution, the size of the electrolyte injection port can be fully utilized to maximize the size of the outlet end of the electrolyte injection nozzle, which improves the electrolyte injection efficiency, and the shape of the electrolyte injection port matches the shape of the outlet end of the electrolyte injection nozzle, which helps to mitigate the leakage problem.

In some embodiments, the outlet end of the electrolyte injection nozzle is adapted to be embedded in the electrolyte injection port.

In the above technical solution, the electrolyte injection port can provide positioning and enclosure for the outlet end of the electrolyte injection nozzle, which enhances fit stability between the electrolyte injection nozzle and the electrolyte injection port, and reduces the likelihood of leakage during electrolyte injection.

In some embodiments, the housing assembly has an accommodation groove with a groove opening that opens in a direction away from the accommodation cavity, the housing assembly further has an electrolyte passage hole communicating the accommodation groove with the accommodation cavity, and the groove opening of the accommodation groove constitutes the electrolyte injection port.

In the above technical solution, the accommodation groove can serve to buffer the electrolyte, which mitigates problems such as electrolyte splashing and overflow. Moreover, sidewalls of the accommodation groove can block electrolyte splashing to some extent, which reduces contamination of the electrolyte to the exterior, and facilitates rapid electrolyte injection. Additionally, the groove opening of the accommodation groove has a larger area compared to a perforated form, which facilitates an increase in the area of the electrolyte injection port, thereby facilitating an increase in the size of the outlet end of the electrolyte injection nozzle, further improving the electrolyte injection efficiency.

In some embodiments, a cross section of a groove opening segment of the accommodation groove gradually increases along a direction away from the accommodation cavity.

In the above technical solution, since the groove opening segment of the accommodation groove is in an expanded form, the problem of electrolyte overflowing from the accommodation groove can be further reduced. Additionally, when the outlet end of the electrolyte injection nozzle is configured to be embedded in the electrolyte injection port, configuring the groove opening segment of the accommodation groove as an expanded form allows the electrolyte injection nozzle to easily extend into the groove opening segment of the accommodation groove, which in turn improves the mounting efficiency before electrolyte injection.

In some embodiments, the housing assembly includes a housing and a terminal structure, where the housing defines the accommodation cavity, the terminal structure is disposed on the housing, and the electrolyte injection port is disposed on the terminal structure.

In the above technical solution, by disposing the electrolyte injection port capable of injecting electrolyte into the accommodation cavity on the terminal structure, electrolyte injection is achieved from the terminal structure without separately providing an electrolyte injection port on the housing of the battery cell, so the electrolyte injection port does not occupy space on the housing separately, and the terminal structure does not need to be reduced in size to avoid the electrolyte injection port, thereby allowing an increase in the area and flow area of the terminal structure without increasing the size of the housing, which helps to reduce flow resistance and enhances current passage efficiency of the battery cell. Moreover, increasing the area of the terminal structure also facilitates assembly connection between the terminal structure and the housing. Additionally, since there is no need to increase the size of the housing to increase the area of the terminal structure, miniaturization and lightweight design of the housing are facilitated. Furthermore, since there is no need to separately provide an electrolyte injection port on the housing of the battery cell, special processing of the housing is avoided, which helps to reduce structural complexity and processing difficulty of the housing. Moreover, there is no need to locally thicken the housing for welding a sealing nail, which can further simplify the structure and processing of the housing, and there is no need to thicken the entire housing for welding a sealing nail, which facilitates the lightweight and thin requirements of the housing, helps to increase the energy density of the battery cell, and helps to reduce the weight and material cost of the housing. Additionally, by disposing the electrolyte injection port on the terminal structure, manufacturing and processing of the electrolyte injection port can be facilitated, making it easier for size, shape, and the like of the electrolyte injection port to meet design requirements and application needs. This helps to reduce processing difficulty and cost of the electrolyte injection port.

In some embodiments, the housing assembly includes a housing and a terminal structure, where the housing defines the accommodation cavity, and the terminal structure includes a terminal body and a terminal cover plate, the terminal body being mounted on the housing, the accommodation groove and the electrolyte passage hole being both formed on the terminal body, and the terminal cover plate covering the groove opening of the accommodation groove.

In the above technical solution, before electrolyte injection, the terminal cover plate may not be mounted, so the groove opening of the accommodation groove is in an open state, allowing the electrolyte injection nozzle to inject the electrolyte into the groove opening of the accommodation groove, and after electrolyte injection, the terminal cover plate may seal the groove opening of the accommodation groove, so as to prevent leakage of the electrolyte from the groove opening of the accommodation groove, which enhances the reliability of the battery cell. Since the terminal cover plate covers the groove opening of the accommodation groove, assembly connection between the terminal cover plate and the terminal body is facilitated.

In some embodiments, the terminal body is an elongated shape, and the accommodation groove is formed as an elongated groove extending from one end of the terminal body to the other end in a length direction of the terminal body.

In the above technical solution, space occupied by the terminal body is fully utilized to increase the size of the accommodation groove, improving the electrolyte injection efficiency, such as configuring the outlet end of the electrolyte injection nozzle to match the shape of the groove opening of the accommodation groove, thereby further improving the electrolyte injection efficiency.

In some embodiments, the battery cell includes a cell assembly, the cell assembly includes an active substance coated portion accommodated in the accommodation cavity and a conductive portion connected to the active substance coated portion, the terminal body has a communication hole communicating the accommodation groove with the accommodation cavity, the communication hole is provided in one or in plurality, and at least one communication hole serves as the electrolyte passage hole, and the conductive portion passes through at least one communication hole to be at least partially accommodated in the accommodation groove.

In the above technical solution, by accommodating at least a portion of the conductive portion in the accommodation groove, at least a portion of the conductive portion occupies space in the accommodation groove, which can reduce the space occupied by the conductive portion in the accommodation cavity, and save the space in the accommodation cavity to accommodate a larger volume of the active substance coated portion, thereby facilitating an increase in the energy density of the battery cell, or facilitating a reduction in the size of the battery cell while maintaining the energy density of the battery cell.

According to a fourth aspect, an embodiment of this application further provides a battery including a busbar component and the battery cell according to any one of the above solutions, where the battery cell is provided in plurality, and at least two of the battery cells are electrically connected through the busbar component.

In the above technical solution, since the manufacturing efficiency of the battery cell according to this embodiment of this application is improved, the manufacturing efficiency of the battery is improved, and the manufacturing cost of the battery is reduced.

According to a fifth aspect, an embodiment of this application further provides an electric apparatus including the battery according to any one of the above solutions.

In the above technical solution, since the manufacturing cost of the battery is reduced, the usage cost of the electric apparatus is reduced.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a battery cell according to some embodiments of this application;
FIG. 4 is a schematic cross-sectional view of an electrolyte injection nozzle according to some embodiments of this application;
FIG. 5 is a schematic diagram of the fit between the electrolyte injection nozzle shown in FIG. 4 and a battery cell;
FIG. 6 is a left view of the electrolyte injection nozzle shown in FIG. 4;
FIG. 7 is a bottom view of the electrolyte injection nozzle shown in FIG. 4;
FIG. 8 is a schematic diagram of an orthographic projection of a battery cell according to some embodiments of this application;
FIG. 9 is a cross-sectional view along line N-N in FIG. 8;
FIG. 10 is a partial enlarged view of FIG. 9;
FIG. 11 is a schematic cross-sectional view of a battery cell according to some embodiments of this application;
FIG. 12 is a schematic diagram of the fit between a terminal body and a conductive portion according to some embodiments of this application;
FIG. 13 is a schematic diagram of the fit between a terminal body and a conductive portion according to some embodiments of this application; and
FIG. 14 is a schematic diagram of the fit between a battery cell and a busbar component according to some embodiments of this application.

Reference signs: vehicle 1000; first direction X; second direction Y; third direction Z; battery 100; controller 200; motor 300; box 101; first box body 1011; second box body 1012; battery cell 102; housing assembly 1021; terminal structure 1020; housing 1; accommodation cavity 1A; first housing wall 11; second housing wall 12; terminal body 2; accommodation groove 211; communication hole 22; first communication hole 221; second communication hole 222; electrolyte passage hole 23; pressure relief structure 1022; terminal cover plate 3; cell assembly 7; active substance coated portion 71; conductive portion 72; busbar component 103; electrolyte injection port 1029; electrolyte injection nozzle 9; inlet end 9a; outlet end 9b; electrolyte injection channel 91; expansion segment 92; contraction segment 93; first constant cross-section segment 94; and second constant cross-section segment 95.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of the battery cell is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. The battery module typically includes a plurality of battery cells. The battery pack typically includes a box configured to encapsulate one or more battery cells or one or more battery modules. The box may prevent liquids or other foreign matter from affecting charging or discharging of the battery cell.

The battery cell includes a housing, a cell assembly, and an electrolyte. The housing is configured to accommodate the cell assembly and the electrolyte. The cell assembly includes at least one electrode assembly. The electrode assembly is composed of a positive electrode plate, a negative electrode plate, and a separator. The electrode assembly may be in a wound structure or may be a laminated structure, and so on. The battery cell mainly relies on migration of metal ions between the positive electrode plate and the negative electrode plate to work.

The positive electrode plate may typically include a positive electrode current collector and a positive electrode active substance layer. The positive electrode active substance layer is directly or indirectly applied on the positive electrode current collector. The part of the positive electrode current collector uncoated with the positive electrode active substance layer protrudes out of the part of the positive electrode current collector coated with the positive electrode active substance layer and serves as a positive electrode tab. A lithium-ion battery is used as an example, for which, the positive electrode current collector may be made of aluminum, and the positive electrode active substance may be made of lithium cobalt oxide, lithium iron phosphate, ternary lithium, lithium manganate oxide, or the like.

The negative electrode plate may typically include a negative electrode current collector and a negative electrode active substance layer. The negative electrode active substance layer is directly or indirectly applied on the negative electrode current collector. The part of the negative electrode current collector uncoated with the negative electrode active substance layer protrudes out of the part of the negative electrode current collector coated with the negative electrode active substance layer and serves as a negative electrode tab. The negative electrode current collector may be made of copper, and the negative electrode active substance may be made of carbon, silicon, or the like.

To allow a large current to pass through without any fusing, a plurality of positive electrode tabs are provided and stacked together to form a tab portion of a positive electrode, and a plurality of negative electrode tabs are provided and stacked together form a tab portion of a negative electrode. The housing is provided with a terminal, where the tab portion of the positive electrode is electrically connected to the terminal of the positive electrode, and the tab portion of the negative electrode is electrically connected to the terminal of the negative electrode. For example, the tab portion may be welded to the terminal to form a direct electrical connection between the tab portion and the terminal. For another example, the cell assembly may include an adapter piece, where the tab portion is welded to the adapter piece, and the adapter piece is welded to the terminal to form an indirect electrical connection between the tab portion and the terminal.

A material of the separator is not limited and may be, for example, polypropylene, polyethylene, or the like.

During the manufacturing process of the battery cell, an electrolyte needs to be injected into the housing. To facilitate electrolyte injection, an electrolyte injection port is typically provided on the housing, and the electrolyte is injected into the electrolyte injection port through an electrolyte injection nozzle. To prevent leakage of the injected electrolyte, the electrolyte injection nozzle is typically configured as a tubular shape with a pointed lower end, where the pointed portion is inserted into the electrolyte injection port. However, such an electrolyte injection nozzle has low electrolyte injection efficiency and a long electrolyte injection time, affecting the production efficiency of the battery cell. Moreover, in the related art, the electrolyte injection nozzle is configured as a tubular shape with a pointed lower end, that is, a constricted outlet form, resulting in significant resistance to the electrolyte flowing out of the electrolyte injection nozzle, requiring the application of positive pressure during electrolyte injection, which poses a risk of electrolyte spraying.

To address the above technical problems, this application proposes an electrolyte injection nozzle. The electrolyte injection nozzle of this embodiment of this application is configured to include an expansion segment, where a flow area of the electrolyte injection nozzle increases in the expansion segment along a direction from an inlet end of the electrolyte injection nozzle to an outlet end of the electrolyte injection nozzle, meaning that an inlet area of the expansion segment is smaller than an outlet area of the expansion segment. For example, the expansion segment may be in a gradually expanding form or a stepped expanding form. In this way, when the electrolyte flows through the electrolyte injection nozzle, the electrolyte passes through a channel segment that suddenly or gradually expands, thereby facilitating an increase in the electrolyte injection efficiency, and reducing the electrolyte injection production time. This can also reduce the passage resistance in the expansion segment, allowing electrolyte injection without applying positive pressure, which facilitates a reduction in the risk of electrolyte spraying.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

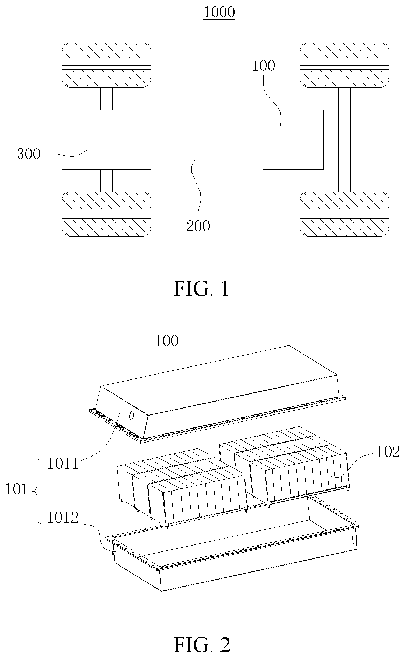

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a structure of a battery 100 according to some embodiments of this application. The battery 100 includes a box 101 and a plurality of battery cells 102, where the battery cells 102 are accommodated in the box 101. The box 101 is configured to provide an assembly space for the battery cells 102. The box 101 may be a variety of structures. In some embodiments, the box 101 may include a first box body 1011 and a second box body 1012. The first box body 1011 and the second box body 1012 fit together to jointly define an assembly space for accommodating the battery cells 102. The second box body 1012 may be a hollow structure with an opening at one end, the first box body 1011 may be a plate structure, and the first box body 1011 covers the opening side of the second box body 1012, such that the first box body 1011 and the second box body 1012 jointly define an assembly space. The first box body 1011 and the second box body 1012 may alternatively both be a hollow structure with an opening on one side, and the opening side of the first box body 1011 covers the opening side of the second box body 1012. Certainly, the box 101 formed by the first box body 1011 and the second box body 1012 may be in a variety of shapes, for example, a cylinder or a cuboid.

In the battery 100, and the plurality of battery cells 102 may be connected in series, parallel, or series-parallel, where being connected in series-parallel means a combination of series and parallel connections of the plurality of battery cells 102. The plurality of battery cells 102 may be directly connected in series, parallel, or series-parallel, and then an entirety of the plurality of battery cells 102 is accommodated in the box 101. Certainly, the battery 100 may alternatively be formed in a manner that a plurality of battery cells 102 are connected in series, parallel, or series-parallel first to form a battery module and then a plurality of battery modules are connected in series, parallel, or series-parallel to form an entirety which is accommodated in the box 101. The battery 100 may further include other structures. For example, the battery 100 may further include a busbar component configured to implement electrical connection between the plurality of battery cells 102.

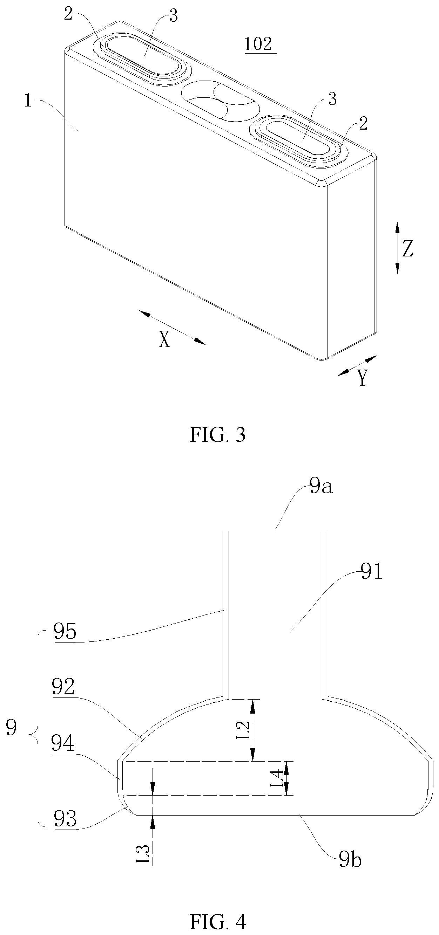

Each battery cell 102 may be a secondary battery or a primary battery, or may be a lithium-sulfur battery, a sodium-ion battery, or a magnesium-ion battery, without being limited thereto. The battery cell 102 may be cylindrical, flat, cuboid, or the like. For example, referring to the embodiment shown in FIG. 3, a length direction of the battery cell 102 is a first direction X, a width direction of the battery cell 102 is a second direction Y, a height direction of the battery cell 102 is a third direction Z, and the first direction X, the second direction Y, and the third direction Z are mutually perpendicular in pairs.

According to some embodiments of this application, referring to FIG. 4, the electrolyte injection nozzle 9 includes an expansion segment 92, where a flow area of the electrolyte injection nozzle 9 increases in the expansion segment 92 along a direction from an inlet end 9a of the electrolyte injection nozzle 9 to an outlet end 9b of the electrolyte injection nozzle 9, meaning that an inlet area of the expansion segment 92 is smaller than an outlet area of the expansion segment 92. The expansion segment 92 may be in a gradually expanding form or a stepped expanding form.

In the above technical solution, since the electrolyte injection nozzle 9 includes the expansion segment 92, an electrolyte injection channel 91 within the electrolyte injection nozzle 9 includes a channel segment with a suddenly or gradually increasing area. When the electrolyte flows through the electrolyte injection nozzle 9, the electrolyte passes through the channel segment with a suddenly or gradually increasing flow area, thereby facilitating an increase in the electrolyte injection efficiency, and reducing the electrolyte injection production time. This can also reduce passage resistance in the expansion segment 92, allowing electrolyte injection without applying positive pressure, which facilitates a reduction in the risk of electrolyte spraying. Of course, in some cases, if positive pressure is required, positive pressure may be applied, and no limitation is imposed herein.

According to some embodiments of this application, referring to FIG. 4, a flow area of the inlet end 9a of the electrolyte injection nozzle 9 is smaller than a flow area of the outlet end 9b of the electrolyte injection nozzle 9. To be specific, the electrolyte injection nozzle 9 defines an electrolyte injection channel 91, where an inlet area of the electrolyte injection channel 91 is smaller than an outlet area of the electrolyte injection channel 91.

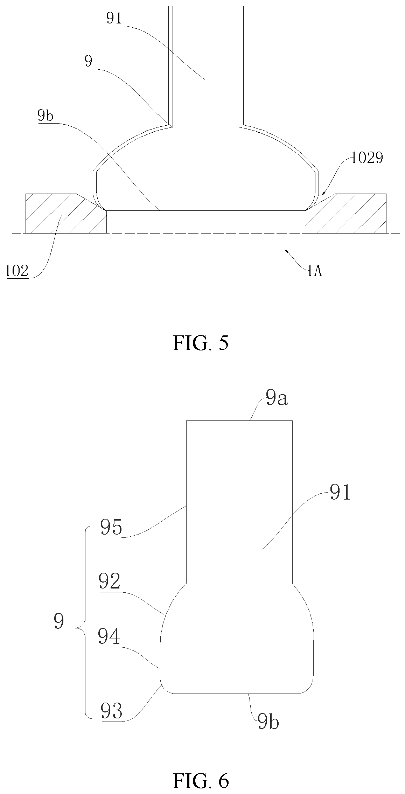

For example, referring to FIG. 4 and FIG. 5, the inlet end 9a of the electrolyte injection nozzle 9 is connected to an electrolyte supply channel of an electrolyte injection apparatus, and the outlet end 9b of the electrolyte injection nozzle 9 is directly mated with an electrolyte injection port 1029 on a battery cell 102, so that the electrolyte injection apparatus delivers the electrolyte to the electrolyte injection channel of the electrolyte injection nozzle 9 through the supply channel, and the electrolyte entering the electrolyte injection channel can be injected into a housing 1 of the battery cell 102 through the electrolyte injection port 1029.

Since the flow area of the outlet end 9b of the electrolyte injection nozzle 9 is larger than that of the inlet end 9a, the electrolyte injection area can be effectively increased, the electrolyte injection efficiency can be improved, the electrolyte injection time is reduced, and the production efficiency of the battery cell 102 is improved. Moreover, the electrolyte injection nozzle 9 of these embodiments of this application has a relatively larger flow area at the outlet end 9b compared with the inlet end 9a, which is equivalent to the form of an expanded outlet. The resistance at the outlet is relatively low, and no positive pressure is required during electrolyte injection, which facilitates a reduction in the risk of electrolyte spraying.

In some embodiments of this application, referring to FIG. 4, the expansion segment 92 is formed in a gradually expanding shape in which the flow area gradually increases along the direction from the inlet end 9a to the outlet end 9b. This configuration of the expansion segment 92 as a gradually expanding form helps to improve flow characteristics of the electrolyte passing through the expansion segment 92, and reduce flow resistance losses. Of course, this application is not limited thereto. For example, the expansion segment 92 may alternatively be configured in a stepped expanding form, where the expansion segment 92 may include a plurality of constant cross-section segments, and the plurality of constant cross-section segments have different areas and are arranged in an ascending order of areas along the direction from the inlet end 9a to the outlet end 9b to present a stepped expanding effect.

In some embodiments of this application, referring to FIG. 4, the electrolyte injection nozzle 9 includes a contraction segment 93, where the contraction segment 93 is disposed on a side of the expansion segment 92 away from the inlet end 9a, a flow area of the contraction segment 93 gradually decreases along the direction from the inlet end 9a to the outlet end 9b, and a minimum cross-sectional end of the contraction segment 93 constitutes the outlet end 9b. This configuration of the outlet position of the electrolyte injection nozzle 9 as a slightly constricted form facilitates the fit between the electrolyte injection nozzle 9 and the electrolyte injection port 1029, mitigates the problem of conductive particles being formed due to frictional collision at the position between the electrolyte injection nozzle 9 and the electrolyte injection port 1029 of the battery cell 102, and reduces the risk of reliability problems for the cell assembly 7 caused by the conductive particles entering the housing 1 through the electrolyte injection port 1029, thereby facilitating an improvement in the reliability of the battery cell 102.

For example, referring to FIG. 4, an outer wall of the contraction segment 93 is a smooth curved surface, to be specific, a longitudinal section of the contraction segment 93 is an arc or approximately an arc, so that when the electrolyte injection nozzle 9 fits with the electrolyte injection port 1029, friction and collision at the position between the contraction segment 93 and the electrolyte injection port 1029 of the battery cell 102 can be further reduced, and the problem of conductive particles falling into the electrolyte injection port 1029 is further mitigated, thereby further improving the reliability of the battery cell 102.

For example, an outer wall of the expansion segment 92 may be a smooth curved surface or an inclined surface, to be specific, a longitudinal section of the expansion segment 92 may be an inclined surface, an arc, or approximately an arc, allowing for flexible design.

In some embodiments of this application, as shown in FIG. 4, a flow area of the minimum cross-sectional end of the contraction segment 93 is larger than a flow area of a minimum cross-sectional end of the expansion segment 92, and an axial length L3 of the contraction segment 93 is smaller than an axial length L2 of the expansion segment 92.

For example, the inlet to the outlet of the electrolyte injection nozzle 9 extends along a direction from top to bottom, the expansion segment 92 is located above the contraction segment 93, the expansion segment 92 gradually or stepwise increases from top to bottom, the contraction segment 93 gradually decreases from top to bottom, an upper end of the expansion segment 92 is the minimum cross-sectional end of the expansion segment 92, a lower end of the contraction segment 93 is the minimum cross-sectional end of the expansion segment 92, an area of the lower end of the contraction segment 93 is larger than an area of the upper end of the expansion segment 92, and a height of the expansion segment 92 in the vertical direction is greater than a height of the contraction segment 93 in the vertical direction.

This configuration facilitates obtaining a larger expansion range, thereby helping to improve the electrolyte injection efficiency, reduce the electrolyte injection time, and improve the production efficiency of the battery cell 102. Moreover, it is also conducive for the fit between the outlet end 9b of the electrolyte injection nozzle 9 and the electrolyte injection port 1029, mitigating the problem of conductive particles being formed due to frictional collision at the position between the electrolyte injection nozzle 9 and the electrolyte injection port 1029 of the battery cell 102, and reducing the risk of reliability problems for the cell assembly 7 caused by the conductive particles entering the housing 1 through the electrolyte injection port 1029, thereby improving the reliability of the battery cell 102.

In some embodiments of this application, as shown in FIG. 4, the electrolyte injection nozzle 9 includes a first constant cross-section segment 94, where the first constant cross-section segment 94 is connected between the expansion segment 92 and the contraction segment 93, a flow area of the first constant cross-section segment 94 is equal to both a flow area of a maximum cross-sectional end of the contraction segment 93 and a flow area of a maximum cross-sectional end of the expansion segment 92, and an axial length L4 of the first constant cross-section segment 94 is greater than an axial length L3 of the contraction segment 93. For example, the expansion segment 92, the first constant cross-section segment 94, and the contraction segment 93 are sequentially arranged from top to bottom, the flow area of the expansion segment 92 increases from top to bottom, the flow area of the contraction segment 93 decreases from top to bottom, a flow area of an upper end of the first constant cross-section segment 94 is equal to both a flow area of an upper end of the contraction segment 93 and a flow area of a lower end of the expansion segment 92, and a height of the first constant cross-section segment 94 in the vertical direction is greater than a height of the contraction segment 93 in the vertical direction. This configuration ensures that an axial length of a segment with a larger flow area of the electrolyte injection nozzle 9 is relatively long, thereby more effectively improving the electrolyte injection efficiency, reducing the electrolyte injection time, and improving the production efficiency of the battery cell 102.

In some embodiments of this application, the electrolyte injection nozzle 9 includes a second constant cross-section segment 95, where the second constant cross-section segment 95 is connected on a side of the expansion segment 92 away from the outlet end 9b, a flow area of the second constant cross-section segment 95 is equal to a flow area of a minimum cross-sectional end of the expansion segment 92, and an end of the second constant cross-section segment 95 away from the expansion segment 92 constitutes the inlet end 9a of the electrolyte injection nozzle 9. For example, the second constant cross-section segment 95 and the expansion segment 92 are sequentially arranged from top to bottom, the flow area of the expansion segment 92 increases from top to bottom, the flow area of the second constant cross-section segment 95 is equal to the flow area of an upper end of the expansion segment 92, and an upper end of the second constant cross-section segment 95 constitutes the inlet end 9a of the electrolyte injection nozzle 9. This configuration simplifies a structure of the electrolyte injection nozzle 9 and facilitates connection of the electrolyte injection nozzle 9 with an electrolyte supply channel of the electrolyte injection apparatus.

Of course, this application is not limited thereto. For example, in other embodiments of this application, at least one of the first constant cross-section segment 94, the second constant cross-section segment 95, and the contraction segment 93 may be eliminated.

In some embodiments of this application, referring to FIG. 4, FIG. 6, and FIG. 7, the outlet end 9b of the electrolyte injection nozzle 9 is formed in an elongated shape, to be specific, a length of the outlet end 9b of the electrolyte injection nozzle 9 is greater than a width, thereby facilitating an increase in an area of the outlet end 9b while reducing sizes occupied by the outlet end 9b of the electrolyte injection nozzle 9 in a plurality of directions, facilitating the fit of the electrolyte injection nozzle 9 with a relatively thin battery cell 102, enhancing adaptability of the electrolyte injection nozzle 9 to maximize utilization of space on the battery cell 102 and increase the area of the outlet end 9b of the electrolyte injection nozzle 9 as much as possible. For example, the outlet end 9b of the electrolyte injection nozzle 9 is formed in a rectangle, an oval, or an ellipse. An oval shape may also be referred to as a racetrack shape, to be specific, a rectangle with semicircles joined at two ends of its length.

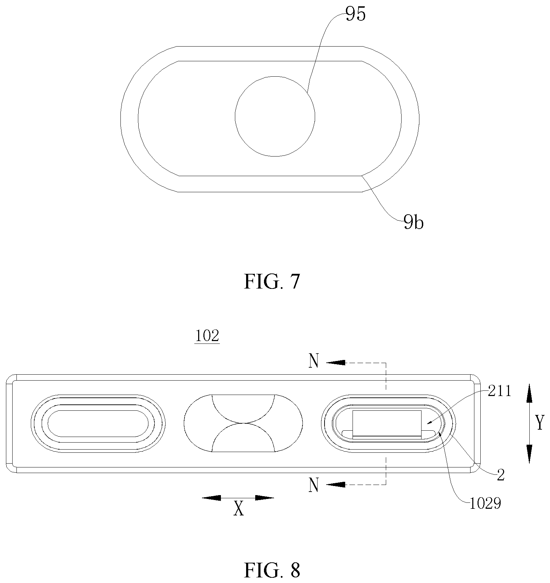

For example, as shown in FIG. 3 and FIG. 8, a length direction of the battery cell 102 is a first direction X, a width direction of the battery cell 102 is a second direction Y, a height direction of the battery cell 102 is a third direction Z. When the electrolyte injection port 1029 is disposed on a side of the battery cell 102 in the third direction, and the size of the battery cell 102 in the first direction X is significantly larger than the size in the second direction Y, configuring the outlet end 9b of the electrolyte injection nozzle 9 as an elongated shape allows a length direction of the outlet end 9b of the electrolyte injection nozzle 9 to be aligned with the first direction X, and a width direction of the outlet end 9b of the electrolyte injection nozzle 9 to be aligned with the second direction Y, thereby fully utilizing space on the battery cell 102 to increase the area of the outlet end 9b of the electrolyte injection nozzle 9 as much as possible.

In some embodiments of this application, a cross-sectional shape of the expansion segment 92 is configured to be consistent with a shape of the outlet end 9b of the electrolyte injection nozzle 9. This facilitates a gradual shape transition of the electrolyte injection nozzle 9, provides a smooth transition, and help to improve flow performance of the electrolyte within the electrolyte injection nozzle 9. For example, when the outlet end 9b of the electrolyte injection nozzle 9 is formed in an elongated shape, a cross section of the expansion segment 92 is formed as an elongated structure, to be specific, a length of the cross section of the expansion segment 92 is greater than a width. For example, the cross section of the expansion segment 92 is formed in a rectangle, an oval, an ellipse, or the like.

This application further proposes an electrolyte injection apparatus including the electrolyte injection nozzle 9 according to any one of the above solutions. The electrolyte injection apparatus of the embodiments of this application improves the electrolyte injection efficiency and reduces the electrolyte injection time. It can be understood that a specific configuration of the electrolyte injection apparatus is not limited. For example, the electrolyte injection apparatus may include a container for storing the electrolyte, an electrolyte supply channel communicating the container to the electrolyte injection nozzle 9, and a control system for controlling whether the electrolyte supply channel delivers the electrolyte to the electrolyte injection nozzle 9.

This application further proposes a battery cell 102. Referring to FIG. 8 to FIG. 10, the battery cell 102 includes a housing assembly 1021, where the housing assembly 1021 has an accommodation cavity 1A, and the housing assembly 1021 has an electrolyte injection port 1029 communicating with the accommodation cavity 1A. Referring to FIG. 3 to FIG. 7, the battery cell 102 is injected with an electrolyte using the electrolyte injection nozzle 9 according to any one of the above solutions, and the electrolyte injection nozzle 9 injects the electrolyte into the accommodation cavity 1A through the electrolyte injection port 1029.

Specifically, the outlet end 9b of the electrolyte injection nozzle 9 is aligned with the electrolyte injection port 1029 on the battery cell 102. For example, the electrolyte injection nozzle 9 may be inserted into or cover the electrolyte injection port 1029. The electrolyte injection apparatus is activated, the electrolyte injection apparatus delivers the electrolyte to the electrolyte injection port 1029 through the electrolyte injection nozzle 9, and the electrolyte injected through the electrolyte injection port 1029 is injected into the accommodation cavity 1A, thereby achieving electrolyte injection for the battery cell 102. In this way, since the electrolyte injection nozzle 9 according to the embodiment of this application is used, the electrolyte injection efficiency is improved, thereby facilitating a reduction in the manufacturing process time of the battery cell 102.

In some embodiments of this application, as shown in FIG. 7 and FIG. 8, a shape of the electrolyte injection port 1029 matches a shape of the outlet end 9b of the electrolyte injection nozzle 9. In this way, the size of the electrolyte injection port 1029 can be fully utilized to maximize the size of the outlet end 9b of the electrolyte injection nozzle 9, which improves the electrolyte injection efficiency, and the shape of the electrolyte injection port 1029 matches the shape of the outlet end 9b of the electrolyte injection nozzle 9, which helps to mitigate the leakage problem.

It should be noted that when the shape of the electrolyte injection port 1029 matches the shape of the outlet end 9b of the electrolyte injection nozzle 9, in some examples, the outlet end 9b of the electrolyte injection nozzle 9 is embedded in the electrolyte injection port 1029, which can reduce a fit clearance between the two; while in some other examples, the outlet end 9b of the electrolyte injection nozzle 9 may alternatively cover the electrolyte injection port 1029, which can reduce contamination of the electrolyte to other positions on the battery cell 102.

In some embodiments of this application, as shown in FIG. 7, the outlet end 9b of the electrolyte injection nozzle 9 is adapted to be embedded in the electrolyte injection port 1029, meaning that before electrolyte injection, the outlet end 9b of the electrolyte injection nozzle 9 may be inserted into the electrolyte injection port 1029. This configuration allows the electrolyte injection port 1029 to provide positioning and enclosure for the outlet end of the electrolyte injection nozzle 9, which enhances fit stability between the electrolyte injection nozzle 9 and the electrolyte injection port 1029, and reduces the likelihood of leakage during electrolyte injection.

Moreover, when a shape of the electrolyte injection port 1029 matches a shape of the outlet end 9b of the electrolyte injection nozzle 9, if the outlet end 9b of the electrolyte injection nozzle 9 is adapted to be embedded in the electrolyte injection port 1029, a fit clearance between the two can be reduced, which further helps to improve the electrolyte injection efficiency and mitigate leakage problems during electrolyte injection.

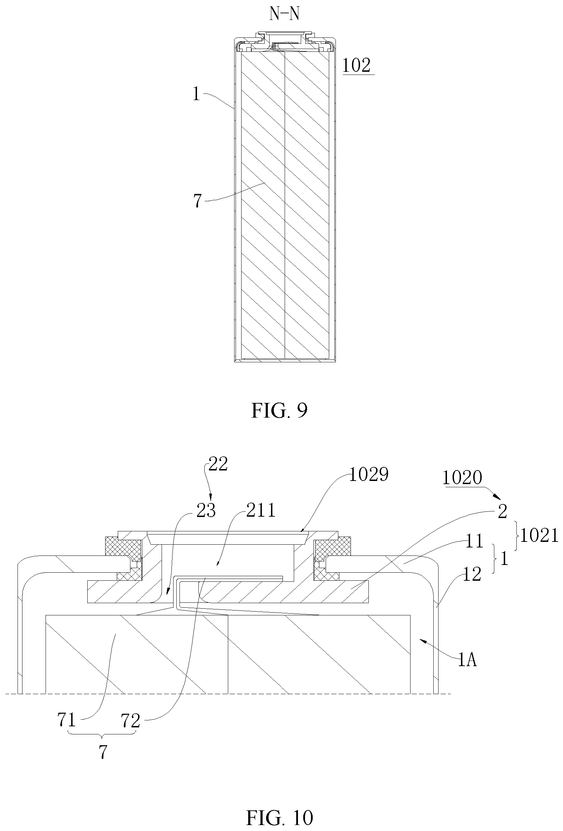

In some embodiments of this application, as shown in FIG. 9, the housing assembly 1021 has an accommodation groove 211 with a groove opening that opens in a direction away from the accommodation cavity 1A, the housing assembly 1021 further has an electrolyte passage hole 23 communicating the accommodation groove 211 with the accommodation cavity 1A, and the groove opening of the accommodation groove 211 constitutes the electrolyte injection port 1029. In this way, during the process of injecting an electrolyte into the battery cell 102, the electrolyte injected from the electrolyte injection nozzle 9 first enters the accommodation groove 211 through the groove opening of the accommodation groove 211 (that is, the electrolyte injection port 1029), and the electrolyte entering the accommodation groove 211 flows toward the accommodation cavity 1A via the electrolyte passage hole 23.

This configuration allows the accommodation groove 211 to serve as a buffer for the electrolyte, to mitigate problems such as splashing and overflow of the electrolyte. Moreover, sidewalls of the accommodation groove 211 (that is, groove walls extending from the groove opening of the accommodation groove 211 toward the accommodation cavity 1A) can block splashing of the electrolyte to some extent, which reduces contamination of the electrolyte to the exterior, and facilitates rapid electrolyte injection. Additionally, since the groove opening of the accommodation groove 211 has a larger area compared to a perforated form, the area of the electrolyte injection port 1029 is increased, which in turn facilitates an increase in the size of the outlet end 9b of the electrolyte injection nozzle 9, and further helps to improve the electrolyte injection efficiency.

In some embodiments of this application, as shown in FIG. 7, a cross section of a groove opening segment of the accommodation groove 211 gradually increases along a direction away from the accommodation cavity 1A, meaning that the groove opening segment of the accommodation groove 211 is in an expanded form. In the above technical solution, since the groove opening segment of the accommodation groove 211 is in an expanded form, the problem of electrolyte overflowing from the accommodation groove 211 can be further reduced. Moreover, when the outlet end 9b of the electrolyte injection nozzle 9 is configured to be embedded in the electrolyte injection port 1029, configuring the groove opening segment of the accommodation groove 211 as an expanded form allows the electrolyte injection nozzle 9 to easily extend into the groove opening segment of the accommodation groove 211, which in turn improves the mounting efficiency before electrolyte injection.

It should be noted that a position of the electrolyte injection port 1029 on the housing assembly 1021 is not limited. For example, when the battery cell 102 requires electrolyte injection, the battery cell 102 may be positioned such that the electrolyte injection port 1029 is located at a top of the housing assembly 1021, allowing the electrolyte injected through the electrolyte injection nozzle 9 into the electrolyte injection port 1029 to flow downward into the accommodation cavity 1A in this case, which can enhance the convenience of electrolyte injection and reduce the likelihood of electrolyte overflow and splashing. When the battery cell 102 is in operation, the electrolyte injection port 1029 may be sealed, and the battery cell 102 may be positioned such that the electrolyte injection port 1029 is located at any position on the housing assembly 1021. For example, the electrolyte injection port 1029 may be positioned at a top, bottom, side, or the like of the housing assembly 1021 during operation of the battery cell 102.

In some embodiments of this application, as shown in FIG. 10, the housing assembly 1021 may include a housing 1 and a terminal structure 1020, where the housing 1 defines the accommodation cavity 1A, the terminal structure 1020 is disposed on the housing 1, and the electrolyte injection port 1029 is disposed on the terminal structure 1020.

In the battery cell 102 according to embodiments of this application, by disposing the electrolyte injection port 1029 capable of injecting an electrolyte into the accommodation cavity 1A on the terminal structure 1020, electrolyte injection is achieved from the terminal structure 1020 without separately providing the electrolyte injection port 1029 on the housing 1 of the battery cell 102, so the electrolyte injection port 1029 does not occupy space on the housing 1 separately, and the terminal structure 1020 does not need to be reduced in size to avoid the electrolyte injection port 1029. In this way, an area and a flow area of the terminal structure 1020 can be increased without increasing the size of the housing 1, which helps to reduce flow resistance and improve the current passage efficiency of the battery cell 102. Moreover, increasing the area of the terminal structure 1020 also facilitates assembly connection between the terminal structure 1020 and the housing 1. Additionally, since there is no need to increase the size of the housing 1 to increase the area of the terminal structure 1020, miniaturization and lightweight design of the housing 1 are facilitated.

Furthermore, since there is no need to separately provide the electrolyte injection port 1029 on the housing 1 of the battery cell 102, special processing of the housing 1 is avoided, which helps to reduce structural complexity and processing difficulty of the housing 1. Moreover, there is no need to locally thicken the housing 1 for welding a sealing nail, which can further simplify the structure and processing of the housing 1, and there is no need to thicken the entire housing 1 for welding a sealing nail, which facilitates the lightweight and thin requirements of the housing 1, helps to increase the energy density of the battery cell 102, and helps to reduce the weight and material cost of the housing 1. Additionally, by disposing the electrolyte injection port 1029 on the terminal structure 1020, manufacturing and processing of the electrolyte injection port 1029 can be facilitated, making it easier for size, shape, and the like of the electrolyte injection port 1029 to meet design requirements and application needs. This helps to reduce processing difficulty of the electrolyte injection port 1029 and reduce the processing cost of the electrolyte injection port 1029.

It should be noted that a structure of the terminal structure 1020 and a form of the electrolyte injection port 1029 disposed thereon are not limited and are specifically designed according to actual conditions. For example, in some specific embodiments, the electrolyte injection port 1029 may be in the form of a perforation penetrating the terminal structure 1020, so as to simplify the structure.

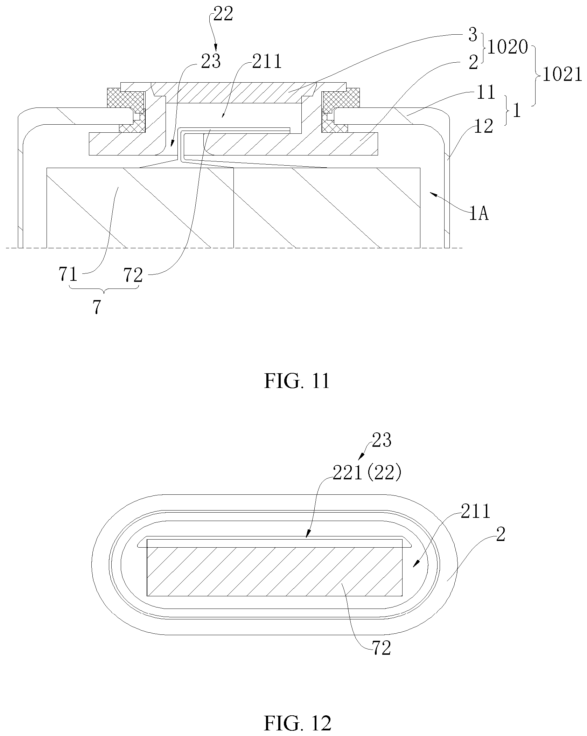

For another example, in some specific embodiments, when the electrolyte injection port 1029 is constituted by the groove opening of the accommodation groove 211, as shown in FIG. 10 and FIG. 11, the housing assembly 1021 includes a housing 1 and a terminal structure 1020, where the housing 1 defines the accommodation cavity 1A, the terminal structure 1020 includes a terminal body 2 and a terminal cover plate 3, the terminal body 2 is mounted on the housing 1, the accommodation groove 211 and the electrolyte passage hole 23 are both formed on the terminal body 2, and the terminal cover plate 3 covers the groove opening of the accommodation groove 211. In this way, before electrolyte injection, the terminal cover plate 3 is not mounted, so the groove opening of the accommodation groove 211 is in an open state, allowing the electrolyte injection nozzle 9 to inject the electrolyte into the groove opening of the accommodation groove 211; and after electrolyte injection, the terminal cover plate 3 may be used to seal the groove opening of the accommodation groove 211, so as to prevent leakage of the electrolyte from the groove opening of the accommodation groove 211, which enhances the reliability of the battery cell 102. Since the terminal cover plate 3 covers the groove opening of the accommodation groove 211, assembly connection between the terminal cover plate 3 and the terminal body 2 is facilitated.

Moreover, by disposing the accommodation groove 211 and the electrolyte passage hole 23 capable of injecting an electrolyte into the accommodation cavity 1A on the terminal structure 1020, electrolyte injection is achieved from the terminal structure 1020 without separately providing the electrolyte injection port 1029 on the housing 1 of the battery cell 102, so the electrolyte injection port 1029 does not occupy space on the housing 1 separately, and the terminal structure 1020 does not need to be reduced in size to avoid the electrolyte injection port 1029. In this way, an area and a flow area of the terminal structure 1020 can be increased without increasing the size of the housing 1, which helps to reduce flow resistance and improve the current passage efficiency of the battery cell 102. Moreover, increasing the area of the terminal structure 1020 also facilitates assembly connection between the terminal structure 1020 and the housing 1. Additionally, since there is no need to increase the size of the housing 1 to increase the area of the terminal structure 1020, miniaturization and lightweight design of the housing 1 are facilitated.

It should be noted that an assembly connection method between the terminal cover plate 3 and the terminal body 2 is not limited and may be, for example, welding (such as fusion welding or brazing) or bonding. For example, the terminal cover plate 3 is connected to the terminal body 2 by laser welding. However, the laser welding of the terminal cover plate 3 and the terminal body 2 has a relatively high requirement for cleanliness of a groove opening segment of the accommodation groove 211. If residual electrolyte is present in the groove opening segment of the accommodation groove 211, the electrolyte is easily vaporized by heat, and the resulting exhaust gas rushes out of a welding molten pool, causing defects such as pinholes and explosion points at the weld. In some embodiments of this application, by configuring the groove opening segment of the accommodation groove 211 as an expanded form, the problem of electrolyte accumulation in the groove opening segment of the accommodation groove 211 can be reduced, which in turn helps to increase the yield of welding between the terminal cover plate 3 and the terminal body 2.

In some embodiments of this application, as shown in FIG. 8, the terminal body 2 is an elongated shape, to be specific, a length of the terminal body 2 is greater than a width of the terminal body 2, and the accommodation groove 211 is formed as an elongated groove extending from one end of the terminal body 2 to the other end in a length direction of the terminal body 2. For example, at least one of a cross section of the terminal body 2 and a cross section of the accommodation groove 211 is formed in a rectangle, an oval, or an ellipse. An oval shape may also be referred to as a racetrack shape, to be specific, a rectangle with semicircles joined at two ends of its length.

In the above technical solution, the configuration of the accommodation groove 211 facilitates full utilization of space on the terminal body 2 to increase the size of the accommodation groove 211 and improve the electrolyte injection efficiency. Referring to FIG. 7 and FIG. 8, for example, configuring the outlet end 9b of the electrolyte injection nozzle 9 to match a shape of the groove opening of the accommodation groove 211 further helps to improve the electrolyte injection efficiency.

In some embodiments of this application, as shown in FIG. 10, the battery cell 102 includes a cell assembly 7, where the cell assembly 7 includes an active substance coated portion 71 accommodated in the accommodation cavity 1A and a conductive portion 72 connected to the active substance coated portion 71. For example, the conductive portion 72 may be connected to the terminal body 2 to form an electrical connection, thereby enabling electrode output of the cell assembly 7 from the terminal body 2. For example, the conductive portion 72 may be welded to the terminal body 2 to achieve connection. It can be understood that the active substance coated portion 71 may include a current collector coated with an active substance layer, and the conductive portion 72 may include only a tab portion or may alternatively include a tab portion and an adapter piece electrically connected to the tab portion, which is not limited herein.

As shown in FIG. 10, the terminal body 2 has a communication hole 22 communicating the accommodation groove 211 with the accommodation cavity 1A. The communication hole 22 is provided in one; or the communication hole 22 is provided in plurality, and at least one of the communication holes 22 serves as the electrolyte passage hole 23, where the conductive portion 72 passes through the at least one of the communication holes 22 to be at least partially accommodated in the accommodation groove 211. For example, the terminal body 2 has the accommodation groove 211 and the communication hole 22. The accommodation groove 211 opens in a direction away from the accommodation cavity 1A to communicate with an exterior of the housing 1. The communication hole 22 is located on a side of the accommodation groove 211 close to the accommodation cavity 1A, the communication hole 22 penetrates a groove wall of the accommodation groove 211 on a side close to the accommodation cavity 1A to communicate the accommodation groove 211 with the accommodation cavity 1A, and at least one of the communication holes 22 serves as the electrolyte passage hole 23. The conductive portion 72 may pass through the communication hole 22 serving as the electrolyte passage hole 23 (that is, the communication hole 22 through which the conductive portion 72 passes can still be used for flow of the electrolyte after the conductive portion 72 passes through), or may pass through a communication hole 22 not serving as the electrolyte passage hole 23 (that is, the communication hole 22 through which the conductive portion 72 passes cannot be used for flow of the electrolyte after the conductive portion 72 passes through).

In this way, by accommodating at least a portion of the conductive portion 72 in the accommodation groove 211, at least the portion of the conductive portion 72 occupies space in the accommodation groove 211, which can in turn reduce the space occupied by the conductive portion 72 in the accommodation cavity 1A, save the space in the accommodation cavity 1A to accommodate a larger volume of the active substance coated portion 71, thereby facilitating an increase in the energy density of the battery cell 102, or facilitating a reduction in the size of the battery cell 102 while maintaining the energy density of the battery cell.

In some embodiments, referring to FIG. 12, the communication hole 22 through which the conductive portion 72 passes is a first communication hole 221 (to be specific, at least one of the communication holes 22 has the conductive portion 72 passed through, and the communication hole 22 through which the conductive portion 72 passes is the first communication hole 221), and at least the first communication hole 221 may be serve as the electrolyte passage hole 23. In this way, when the terminal body 2 has the first communication hole 221 through which the conductive portion 72 passes, regardless of whether the terminal body 2 has a second communication hole 222 not passed through by the conductive portion 72 as described below, the first communication hole 221 through which the conductive portion 72 passes also serves an electrolyte passage function, meaning that the first communication hole 221 has an electrolyte passage gap after the conductive portion 72 passes through. During electrolyte injection, after the electrolyte is injected into the accommodation groove 211, at least a portion of the electrolyte flows into the accommodation cavity 1A from the first communication hole 221 through which the conductive portion 72 passes.

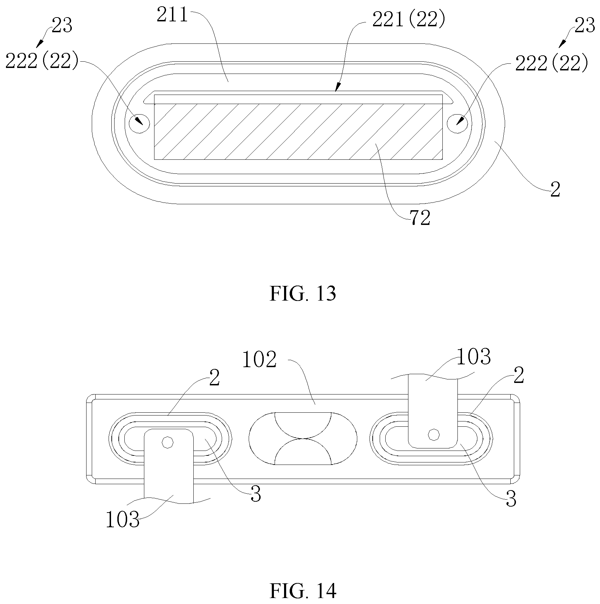

In some embodiments, referring to FIG. 13, the communication hole 22 through which the conductive portion 72 passes is a first communication hole 221, the communication hole 22 is provided in plurality and further includes at least one second communication hole 222 not passed through by the conductive portion 72 (to be specific, at least one communication hole 22 does not have the conductive portion 72 passed through, and the communication hole 22 not passed through by the conductive portion 72 is the second communication hole 222), and at least the second communication hole 222 may be serve as the electrolyte passage hole 23.

For example, when the first communication hole 221 also serves an electrolyte passage function (to be specific, the first communication hole 221 has an electrolyte passage gap after the conductive portion 72 passes through), both the first communication hole 221 and the second communication hole 222 serve as the electrolyte passage hole 23. During electrolyte injection, after the electrolyte is injected into the accommodation groove 211, a portion may flow into the accommodation cavity 1A from the first communication hole 221 through which the conductive portion 72 passes, and a portion may flow into the accommodation cavity 1A from the second communication hole 222 not passed through by the conductive portion 742.

For another example, when the first communication hole 221 does not have an electrolyte passage function (to be specific, the first communication hole 221 is blocked and cannot allow electrolyte passage after the conductive portion 72 passes through), only the second communication hole 222 serves as the electrolyte passage hole 23. During electrolyte injection, after the electrolyte is injected into the accommodation groove 211, the electrolyte flows into the accommodation cavity 1A only from the second communication hole 222 not passed through by the conductive portion 72.

In these embodiments of this application, when at least the first communication hole 221 serves as the electrolyte passage hole 23, the first communication hole 221 also serves the electrolyte passage function, to be specific, after the conductive portion 72 passes through the first communication hole 221, the first communication hole 221 allows passage of the electrolyte. In this case, at least the first communication hole 221 may be used for passage of the electrolyte, allowing a choice of whether to further provide the communication hole 22 not passed through by the conductive portion 72 (such as the second communication hole 222), thereby facilitating a reduction in a total number of communication holes 22 provided, simplifying a structure and processing of the terminal body 2, and enhancing structural strength of the terminal body 2.

In these embodiments of this application, when at least the second communication hole 222 serves as the electrolyte passage hole 23, at least the second communication hole 222 may be used for passage of the electrolyte. In this case, there is no need to increase a diameter of the first communication hole 221 or the number of the first communication holes 221 to allow the electrolyte to pass through the first communication hole 221, nor is it necessary to reduce the size of the conductive portion 72 to allow the electrolyte to pass through the first communication hole 221. The size of the first communication hole 221 is designed to be slightly larger than the size of the conductive portion 72, allowing the conductive portion 72 to pass through, thereby mitigating problems of impurities and the like falling into the accommodation cavity 1A through a gap between the conductive portion 72 and the first communication hole 221, mitigating problems of local structural weakness of the terminal body 2 due to an excessively large size of the first communication hole 221, and allowing the conductive portion 72 to have a relatively large size, which can improve the current passage efficiency. Moreover, since the electrolyte passes through the second communication hole 222 without being affected by the conductive portion 72, electrolyte injection efficiency can be improved, and problems such as contamination or corrosion of the conductive portion 72 by the electrolyte are mitigated.

For example, in Example 1 of this application, the communication hole 22 is provided in at least one, and each communication hole 22 has the conductive portion 72 passed through, so each communication hole 22 is the first communication hole 221. In this case, the at least one first communication hole 221 constitutes the electrolyte passage hole 23, and after the electrolyte is injected into the accommodation groove 211, the electrolyte flows into the accommodation cavity 1A from the first communication hole 221 through which the conductive portion 72 passes.

For example, in Example 2 of this application, the communication hole 22 is provided in at least two, at least one of the communication holes 22 is the first communication hole 221 through which the conductive portion 72 passes, and at least one of the communication holes 22 is the second communication hole 222 not passed through by the conductive portion 72. In this case, both the first communication hole 221 and the second communication hole 222 constitute the electrolyte passage hole 23, and after the electrolyte is injected into the accommodation groove 211, a portion flows into the accommodation cavity 1A from the first communication hole 221 through which the conductive portion 72 passes, and the remaining portion flows into the accommodation cavity 1A from the second communication hole 222 not passed through by the conductive portion 72.

For example, in Example 3 of this application, the communication hole 22 is provided in at least two, at least one of the communication holes 22 is the first communication hole 221 through which the conductive portion 72 passes, and at least one of the communication holes 22 is the second communication hole 222 not passed through by the conductive portion 72, where the first communication hole 221 is blocked and cannot allow electrolyte passage after the conductive portion 72 passes through. In this case, only the second communication hole 222 constitutes the electrolyte passage hole 23, and after the electrolyte is injected into the accommodation groove 211, the electrolyte flows into the accommodation cavity 1A from the second communication hole 222 not passed through by the conductive portion 72.

In some embodiments, referring to FIG. 12 and FIG. 13, the terminal body 2 is formed as an elongated structure, and the communication hole 22 through which the conductive portion 72 passes (that is, the first communication hole 221) is formed as an elongated hole with a length greater than a width and extending from one end of the terminal body 2 to the other end in a length direction of the terminal body 2. In this way, the space on the terminal body 2 can be fully utilized to maximize a length of the first communication hole 221, allowing the first communication hole 221 to pass through a larger-sized conductive portion 72, thereby facilitating an increase in the size of the conductive portion 72, and improving the current passage efficiency. When the first communication hole 221 serves as the electrolyte passage hole 23, increasing the length of the first communication hole 221 further helps to improve the electrolyte injection efficiency.

In some embodiments, when the communication hole 22 through which the conductive portion 72 passes is the first communication hole 221, the first communication hole 221 and the conductive portion 72 each are provided in plurality, and each of the first communication holes 221 has at least one conductive portion 72 passed through. In this case, at least two of the communication holes 22 have the conductive portion 72 passed through, thereby mitigating the problem that a size of a single first communication hole 221 is relatively large, resulting in local structural weakness of the terminal body 2. Moreover, if the first communication hole 221 serves as the electrolyte passage hole 23, increasing the number of the first communication holes 221 further helps to improve the electrolyte injection efficiency.

For example, when the first communication hole 221 is formed as an elongated hole with a length greater than a width and extending from one end of the terminal body 2 to the other end in a length direction of the terminal body 2, the plurality of first communication holes 221 are spaced apart along a width direction of the terminal body 2. In this way, the space on the terminal body 2 can be relatively fully utilized, which can mitigate the problem that a size of a single first communication hole 221 is relatively large, resulting in local structural weakness of the terminal body 2. Moreover, if the first communication hole 221 serves as the electrolyte passage hole 23, increasing the number of the first communication holes 221 further helps to improve the electrolyte injection efficiency.

In some embodiments, referring to FIG. 13, when the terminal body 2 has both the first communication hole 221 and the second communication hole 222, if the first communication hole 221 is formed as an elongated hole with a length greater than a width and extending from one end of the terminal body 2 to the other end in a length direction of the terminal body 2, the second communication hole 222 may be disposed at at least one of two ends of the first communication hole 221 in the length direction, thereby fully utilizing space to maximize the size of the second communication hole 222 while enhancing structural strength of the terminal body 2, and improving the electrolyte injection efficiency. Moreover, when the second communication hole 222 is disposed at each of two ends of the first communication hole 221 in the length direction, the electrolyte injection efficiency can be further improved, and a size of each second communication hole 222 is reduced, mitigating problems of local weakness of the terminal body 2.

Of course, in these embodiments of this application, a shape of the first communication hole 221 and a relative positional relationship between the first communication hole 221 and the second communication hole 222 are not limited to the above description and are adjusted according to actual conditions.

Of course, this application is not limited thereto. The electrolyte injection port 1029 may alternatively not be disposed on the terminal structure 1022. For example, the electrolyte injection port 1029 may be directly disposed on the housing 1 or disposed on a pressure relief structure mounted on the housing 1, thereby achieving flexible design of a position of the electrolyte injection port 1029.

In some embodiments of this application, as shown in FIG. 10, the housing 1 includes a first housing wall 11, and the electrolyte injection port 1029 is directly or indirectly disposed on the first housing wall 11. As shown in FIG. 10, the first housing wall 11 is integrally formed with at least one second housing wall 12, and the second housing wall 12 extends toward one side in a thickness direction of the first housing wall 11. Alternatively, the first housing wall 11 may alternatively be constructed as an integrally formed cover plate. This configuration achieves flexible design of a position of the electrolyte injection port 1029, thereby increasing an applicable scope of the battery cell 102 of embodiments of this application.

It should be noted that the second housing wall 12 may extend from an edge of the first housing wall 11. When the first housing wall 11 is rectangular, at least one of four edges of the first housing wall 11 may extend to form the second housing wall 12. For example, only one edge of the first housing wall 11 extends to form the second housing wall 12, or only two edges of the first housing wall 11 may separately extend to form the second housing wall 12, or three edges of the first housing wall 11 may separately extend to form the second housing wall 12, or all four edges of the first housing wall 11 may extend to form the second housing wall 12. For example, when the housing 1 is a rectangular housing, any wall surface of the rectangular housing may serve as the first housing wall 11.

For example, the housing 1 may include a housing body and a cover plate, where the housing body defines a space open on one side, and the cover plate is disposed on the open side of the housing body to form the accommodation cavity 1A between the housing body and the cover plate. In this case, a side wall surface of the housing body opposite the cover plate is the first housing wall 11, and a wall surface of the housing body connecting between the first housing wall 11 and the cover plate is the second housing wall 12. Alternatively, a side wall surface of the housing body opposite the cover plate is the second housing wall 12, and a wall surface of the housing body connecting between the second housing wall 12 and the cover plate is the first housing wall 11. Alternatively, the cover plate is a first housing wall 11.

According to some embodiments of this application, referring to FIG. 2 and FIG. 14, this application further provides a battery 100 including a busbar component 103 and the battery cell 102 according to any one of the above solutions, where the battery cell 102 is provided in plurality, and at least two of the battery cells are electrically connected through the busbar component 103. This configuration enables series and/or parallel connection of a plurality of battery cells 102. The manufacturing efficiency of the battery 100 according to these embodiments of this application can be improved. It should be noted that the battery 100 according to these embodiments of this application may include a box 101 or may not include a box 101.

For example, when the plurality of battery cells 102 are connected in series, a terminal cover plate 3 of an anode of one battery cell 102 is connected to a terminal cover plate 3 of a cathode of a next battery cell 102 through one busbar component 103, and a terminal cover plate 3 of a cathode of the one battery cell 102 is connected to a terminal cover plate 3 of an anode of a previous battery cell 102 through another busbar component 103.

An embodiment of this application further provides an electric apparatus including the battery 100 according to any one of the above solutions. According to some embodiments of this application, this application further provides an electric apparatus including the battery 100 according to any one of the above solutions, where the battery 100 is configured to provide electric energy to the electric apparatus. The electric apparatus may be any device or system applying the battery 100 as described above.

The following describes a specific embodiment according to this application.

The battery cell 102 includes a housing 1, a terminal body 2, a terminal cover plate 3, and a cell assembly 7. The housing 1 defines an accommodation cavity 1A, the terminal body 2 is disposed on the housing 1, the terminal body 2 has an accommodation groove 211 and a communication hole 22, a groove opening of the accommodation groove 211 opens in a direction away from the accommodation cavity 1A, the communication hole 22 communicates the first accommodation groove 211 with the accommodation cavity 1A, the communication hole 22 is provided in one, or the communication hole 22 is provided in plurality and at least one of the communication holes 22 serves as an electrolyte passage hole 23, the terminal cover plate 3 is a non-perforated cover plate and covers the terminal body 2 and is configured to seal the groove opening of the accommodation groove 211.

The cell assembly 7 includes an active substance coated portion 71 and a conductive portion 72, where the active substance coated portion 71 is accommodated in the accommodation cavity 1A, the conductive portion 72 connects the active substance coated portion 71 and the terminal body 2, the conductive portion 72 passes through at least one of the communication holes 22 to be at least partially accommodated in the accommodation groove 211, and a portion of the conductive portion 72 located in the accommodation groove 211 is welded to the terminal body 2.

During the process of manufacturing the battery cell 102, the conductive portion 72 first passes through the communication hole 22 on the terminal body 2, achieving welding of the conductive portion 72 to the terminal body 2. Then, an electrolyte injection nozzle 9 is used to inject an electrolyte into the accommodation groove 211, the electrolyte injected into the accommodation groove 211 enters the housing 1 through the electrolyte passage hole 23, and after electrolyte injection is completed, the terminal cover plate 3 covers and is welded to the terminal body 2, achieving a tight seal.

The electrolyte injection nozzle 9 includes a second constant cross-section segment 95, an expansion segment 92, a first constant cross-section segment 94, and a contraction segment 93 that are sequentially arranged along a direction from an inlet end 9a of the electrolyte injection nozzle 9 to an outlet end 9b of the electrolyte injection nozzle 9. The expansion segment 92 is formed in a gradually expanding shape in which a flow area gradually increases along the direction from the inlet end 9a to the outlet end 9b. A flow area of the contraction segment 93 gradually decreases along the direction from the inlet end 9a to the outlet end 9b, a flow area of a minimum cross-sectional end of the contraction segment 93 is larger than a flow area of a minimum cross-sectional end of the expansion segment 92, an axial length L3 of the contraction segment 93 is smaller than an axial length L2 of the expansion segment 92, and an outer wall of the contraction segment 93 is a smooth curved surface.

A flow area of the first constant cross-section segment 94 is equal to both a flow area of a maximum cross-sectional end of the contraction segment 93 and a flow area of a maximum cross-sectional end of the expansion segment 92, and an axial length L4 of the first constant cross-section segment 94 is greater than an axial length L3 of the contraction segment 93. A flow area of the second constant cross-section segment 95 is equal to a flow area of a minimum cross-sectional end of the expansion segment 92. The minimum cross-sectional end of the contraction segment 93 constitutes the outlet end 9b of the electrolyte injection nozzle 9, an end of the second constant cross-section segment 95 away from the expansion segment 92 constitutes the inlet end 9a of the electrolyte injection nozzle 9, and a flow area of the inlet end 9a of the electrolyte injection nozzle 9 is smaller than a flow area of the outlet end 9b of the electrolyte injection nozzle 9. The outlet end 9b of the electrolyte injection nozzle 9 is formed in an elongated shape, and a cross-sectional shape of the expansion segment 92 is consistent with a shape of the outlet end 9b of the electrolyte injection nozzle 9.

For example, when the electrolyte injection nozzle 9 is positioned such that an upper end is the inlet end 9a and a lower end is the outlet end 9b, a cross section of the second constant cross-section segment 95 is circular with a consistent diameter from top to bottom, a cross section of the expansion segment 92 is oval and a cross-sectional area gradually increases from top to bottom, a cross section of the first constant cross-section segment 94 is oval with a consistent cross-sectional area from top to bottom, and a cross section of the contraction segment 93 is oval and a cross-sectional area gradually decreases from top to bottom. The electrolyte injection nozzle 9 may be made of corrosion-resistant or metallic material.

In battery cells of the related art, during electrolyte injection, due to a small outlet end of an electrolyte injection nozzle, the electrolyte injection efficiency is low, and high positive pressure is required to assist electrolyte injection, causing the electrolyte to spray out due to internal retraction of the battery cell after electrolyte injection. In these embodiments of this application, since a groove opening of the accommodation groove 211, the expansion segment 92, the first constant cross-section segment 94, and the contraction segment 93 are all configured with an oval cross section, during electrolyte injection, the contraction segment 93 is inserted into a groove opening segment of the accommodation groove 211, and an area of the outlet end 9b of the electrolyte injection nozzle 9 is relatively large, facilitating an increase in electrolyte injection efficiency. Electrolyte injection does not require positive pressure, and the electrolyte effectively reduces internal pressure of the battery cell 102 during injection, thereby reducing the risk of electrolyte spraying.

When the contraction segment 93 is inserted into the groove opening segment of the accommodation groove 211, since the contraction segment 93 is in a constricted form with an outer wall as a smooth curved surface, friction problems caused by inserting the contraction segment 93 into the groove opening segment of the accommodation groove 211 may be mitigated, reliability problems caused by conductive particles entering the interior of the battery cell 102 due to friction may be mitigated, thereby enhancing the reliability of the battery cell 102.

In summary, an upper part of the electrolyte injection nozzle 9 is connected to an electrolyte supply channel of the electrolyte injection apparatus, a lower part directly connects to the electrolyte injection port 1029 on the battery cell 102, and the outlet end 9b of the electrolyte injection nozzle 9 adopts an oval shape, which can effectively increase an electrolyte injection area and improve the electrolyte injection efficiency. Moreover, the outlet end 9b of the electrolyte injection nozzle 9 is configured in a constricted form, allowing a good fit with the electrolyte injection port 1029, which facilitates a reduction in electrolyte overflow during electrolyte injection. Inserting the electrolyte injection nozzle 9 into the electrolyte injection port 1029 can also effectively prevent conductive particles from falling due to mutual friction between the electrolyte injection nozzle 9 and the electrolyte injection port 1029, enhancing the reliability of the battery cell 102.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An electrolyte injection nozzle, wherein the electrolyte injection nozzle comprises an expansion segment, a flow area of the electrolyte injection nozzle increases in the expansion segment along a direction from an inlet end of the electrolyte injection nozzle to an outlet end of the electrolyte injection nozzle.

2. The electrolyte injection nozzle according to claim 1, wherein a flow area of the inlet end of the electrolyte injection nozzle is smaller than a flow area of the outlet end of the electrolyte injection nozzle.

3. The electrolyte injection nozzle according to claim 1 or 2, wherein the expansion segment is formed in a gradually expanding shape in which the flow area gradually increases along the direction from the inlet end to the outlet end.

4. The electrolyte injection nozzle according to any one of claims 1 to 3, wherein the electrolyte injection nozzle comprises a contraction segment, the contraction segment being disposed on a side of the expansion segment away from the inlet end, a flow area of the contraction segment gradually decreasing along the direction from the inlet end to the outlet end, and a minimum cross-sectional end of the contraction segment constituting the outlet end.

5. The electrolyte injection nozzle according to claim 4, wherein a flow area of the minimum cross-sectional end of the contraction segment is larger than a flow area of a minimum cross-sectional end of the expansion segment, and an axial length of the contraction segment is smaller than an axial length of the expansion segment.

6. The electrolyte injection nozzle according to claim 4 or 5, wherein the electrolyte injection nozzle comprises a first constant cross-section segment, the first constant cross-section segment being connected between the expansion segment and the contraction segment, a flow area of the first constant cross-section segment being equal to both a flow area of a maximum cross-sectional end of the contraction segment and a flow area of a maximum cross-sectional end of the expansion segment, respectively, and an axial length of the first constant cross-section segment being greater than an axial length of the contraction segment.

7. The electrolyte injection nozzle according to any one of claims 4 to 6, wherein an outer wall of the contraction segment is a smooth curved surface.

8. The electrolyte injection nozzle according to any one of claims 1 to 7, wherein the electrolyte injection nozzle comprises a second constant cross-section segment, the second constant cross-section segment being connected on a side of the expansion segment away from the outlet end, a flow area of the second constant cross-section segment being equal to a flow area of a minimum cross-sectional end of the expansion segment, and an end of the second constant cross-section segment away from the expansion segment constituting the inlet end.

9. The electrolyte injection nozzle according to any one of claims 1 to 8, wherein the outlet end of the electrolyte injection nozzle is formed in an elongated shape.

10. The electrolyte injection nozzle according to any one of claims 1 to 9, wherein a cross-sectional shape of the expansion segment is consistent with a shape of the outlet end of the electrolyte injection nozzle.

11. An electrolyte injection apparatus comprising the electrolyte injection nozzle according to any one of claims 1 to 10.

12. A battery cell comprising a housing assembly, wherein the housing assembly has an accommodation cavity, the housing assembly has an electrolyte injection port communicating with the accommodation cavity, the battery cell is injected with an electrolyte using the electrolyte injection nozzle according to any one of claims 1 to 11, and the electrolyte injection nozzle injects the electrolyte into the accommodation cavity through the electrolyte injection port.

13. The battery cell according to claim 12, wherein a shape of the electrolyte injection port matches a shape of an outlet end of the electrolyte injection nozzle.

14. The battery cell according to claim 12 or 13, wherein the outlet end of the electrolyte injection nozzle is adapted to be embedded in the electrolyte injection port.

15. The battery cell according to any one of claims 12 to 14, wherein the housing assembly has an accommodation groove with a groove opening that opens in a direction away from the accommodation cavity, the housing assembly further has an electrolyte passage hole communicating the accommodation groove with the accommodation cavity, and the groove opening of the accommodation groove constitutes the electrolyte injection port.

16. The battery cell according to claim 15, wherein a cross section of a groove opening segment of the accommodation groove gradually increases along a direction away from the accommodation cavity.

17. The battery cell according to any one of claims 12 to 16, wherein the housing assembly comprises a housing and a terminal structure, the housing defining the accommodation cavity, the terminal structure being disposed on the housing, and the electrolyte injection port being disposed on the terminal structure.

18. The battery cell according to claim 15 or 16, wherein the housing assembly comprises a housing and a terminal structure, wherein the housing defines the accommodation cavity, and the terminal structure comprises a terminal body and a terminal cover plate, the terminal body being mounted on the housing, the accommodation groove and the electrolyte passage hole being both formed on the terminal body, and the terminal cover plate covering the groove opening of the accommodation groove.

19. The battery cell according to claim 18, wherein the terminal body is an elongated shape, and the accommodation groove is formed as an elongated groove extending from one end of the terminal body to the other end in a length direction of the terminal body.

20. The battery cell according to claim 18 or 19, wherein the battery cell comprises a cell assembly, the cell assembly comprises an active substance coated portion accommodated in the accommodation cavity and a conductive portion connected to the active substance coated portion, the terminal body has a communication hole communicating the accommodation groove with the accommodation cavity, the communication hole is provided in one or in plurality, and at least one communication hole serves as the electrolyte passage hole, and the conductive portion passes through at least one communication hole to be at least partially accommodated in the accommodation groove.

21. A battery comprising a busbar component and the battery cell according to any one of claims 12 to 20, wherein the battery cell is provided in plurality, and at least two battery cells are electrically connected through the busbar component.

22. An electric apparatus comprising the battery according to claim 21.
